# EUROPEAN PATENT SPECIFICATION

(11) **EP 0 574 103 B1**
(45) Date of publication and mention of the grant of the patent: **13.08.1997**
(21) Application number: 93250139.8
(22) Date of filing: 12.05.1993
(51) Int. Cl.: B41F 13/22, B41F 13/00

(54) **Printing press machine**
Druckmaschine
Presse à imprimer

(30) Priority: 04.06.1992 JP 37775/92
(43) Date of publication of application: 15.12.1993
(73) Proprietor: Komori Corporation, Sumida-ku Tokyo (JP)
(72) Inventor: Toyoda, Hideaki, c/o Komori Corporation, Higashikatsushika-gun, Chiba (JP)
(74) Representative: UEXKÜLL & STOLBERG

(56) References cited:
- EP-A- 0 150 047
- DE-A- 3 730 153
- DE-A- 4 036 121
- DE-C- 3 545 272
- DE-U- 8 813 088
- US-A- 5 058 496

## Description

### BACKGROUND OF THE INVENTION

### Field of the Invention

The present invention relates to a printing press having the temperature of the bearings of a cylinder controlled.

### Description of Related Art

In an intaglio rotary printing press, ink is supplied to an intaglio surface of an intaglio plate cylinder by an ink device and redundant ink is wiped off by a wiping roller. The remaining ink is transferred to a paper passing between the intaglio plate cylinder and an impression cylinder in order to print pictures and letters.

In general, ink used for such an intaglio printing press is relatively hard and has relatively high viscosity. If a temperature of an intaglio surface of the intaglio plate cylinder is too low, ink is not transferred to the intaglio surface well and ink is not spread into narrow grooves. Therefore, the intaglio plate cylinder has to be heated to 60°C ∼ 90°C.

To heat the intaglio plate cylinder, in general, a zigzag water path is provided near the surface of the intaglio plate cylinder of the printing press. Heated water is circulated by a water heating unit to the zigzag water path through a rotary joint provided at a plate cylinder shaft integrally formed to the intaglio plate cylinder.

In the above structure, heated water is passed through the plate cylinder so that the plate cylinder supported by the bearings thermally expands. On the other hand, in such a printing press only a small bearing gap is allowed (minus tolerance) in order to maintain printing quality and to prevent the bearings from fretting caused by printing pressure.

While a bearing housing mounted on a frame of the printing press and the frame itself are cool, the plate cylinder expands by heat condition. Thus, overload is applied to the bearings and the bearings would be damaged.

In addition, while the bearing housing is at a room temperature, the plate cylinder shaft is thermally expanded by conductive heat. Even if the printing surface is heated above the predetermined temperature ( for example, 9°C), the bearing gap decreases, resulting in a minus tolerance, which causes an overload applied to the bearings so that a printing operation can not start since the bearing gap has an improper range. Although the temperature of the surface of the plate cylinder is stable, it is an improper condition while a temperature difference between an outer peripheral surface of the bearing and an inner peripheral surface of the bearing is large. Printing operation is interrupted until the temperature difference goes down to a predetermined level.

An intaglio printing press requires large printing pressure so that the bearings and the bearing housing become large in size, so that a longer time period (for example, more than eight hours) is needed to heat up the bearings to a stable temperature.

Such problem exists not only with an intaglio printing press but also with a general printing press having a heated plate cylinder.

EP-A3-0 150 047 discloses a flexo-printing-press which has in one embodiment its free provided with water channels for circulating hot water. In another embodiment, hot water pipes are attached to the frame to transfer heat from the pipes to the frame. In still another embodiment the frame is provided with radiating fins to achieve a controlled air flow about the machine.

### SUMMARY OF THE INVENTION

This invention relates to a printing press as claimed in claim 1.

According to the present invention, although the printing cylinder is thermally expanded by heating the cylinder, overload applied to the bearing can be avoided since the bearing housing or the frame is heated, too.

Thus, the temperature of the bearing becomes stable soon, so that a warming up period for starting a printing operation can be considerably shortened.

By thermo-controlling the bearing housing, the bearing housing is not over heated so that harmful influence for other devices can be prevented and required energy can be saved.

Further, according to the present invention, overload applied on the bearing can be prevented during warming-up operation so that the bearing does not change and a bearing gap can be designed in a proper range. Thus, high quality printing is obtained and friction and noise can be reduced.

### BRIEF DESCRIPTION OF THE DRAWINGS

Further objects and advantages of the invention can be more fully understood from the following detailed description taken in conjunction with the accompanying drawings in which:
Fig. 1 is a block diagram of an intaglio printing press of an embodiment according to the present invention;
Fig. 2 is a cross sectional view of a bearing portion of the intaglio printing press of the embodiment according to the present invention;
Fig. 3 shows a relation between a time period and a temperature of the plate cylinder and a temperature difference between an outer peripheral portion and an inner peripheral portion of a bearing of one embodiment according to the present invention.
Fig. 4 is a perspective view for showing a water path inside of an intaglio plate cylinder; and
Fig. 5 shows a relation between a time period and a temperature of the plate cylinder and a temperature difference between an outer peripheral portion and an inner peripheral portion of a bearing of one embodiment according to a conventional printing press.

### DETAILED DESCRIPTION OF THE PREFERRED EMBODIMENT

One embodiment of a printing press according to the present invention employed at an intaglio printing press machine will be described.

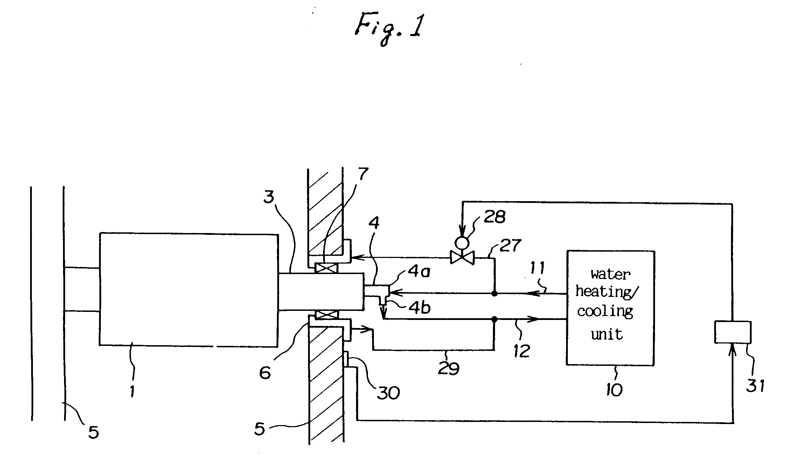

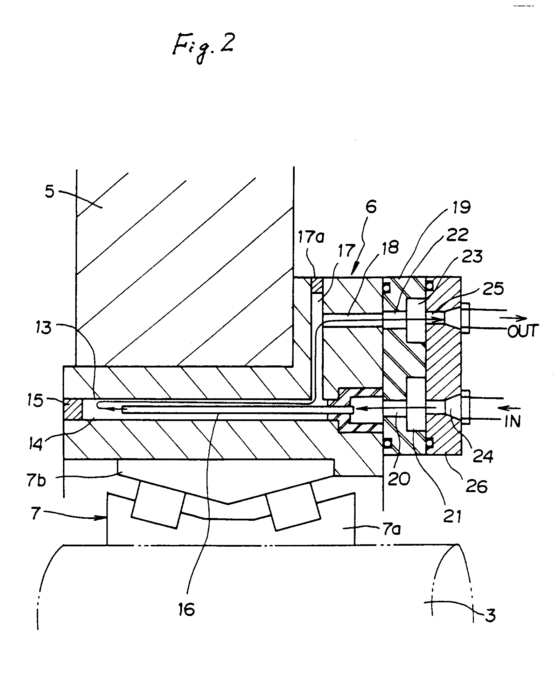

As shown in Figs. 1 and 2, a plate cylinder shaft 3 integrally formed with an intaglio plate cylinder 1 is pivotably supported on a bearing housing 6 mounted on a frame 5 of a printing press machine through a bearing 7.

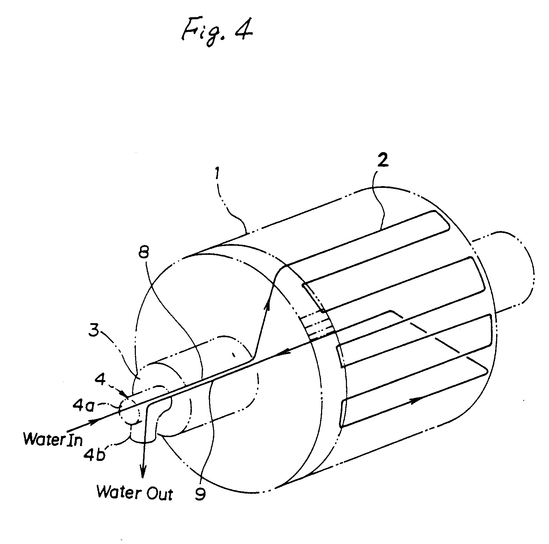

As shown in Fig. 4, a zigzag water path 2 is provided near an outer peripheral surface of the intaglio plate cylinder 1. An inlet path 8 and an outlet 9 of the water path 2 are formed in the plate cylinder shaft 3 and extended to an inlet portion 4a and an outlet portion 4b of a rotary joint 4, respectively. A water heating/cooling unit or first heating means 10 for heating and cooling water is connected to the inlet portion 4a and the outlet portion 4b through pipes 11 and 12, respectively.

Accordingly, water is heated by the water heating/cooling unit 10 and supplied from the pipe 11 to the water path 2 in the intaglio plate cylinder 1 through the rotary joint 4, the inlet 8 in the plate cylinder shaft 3, the rotary joint 4 and the pipe 12.

A water path 13 is provided in the bearing housing 6 to pass heating water therethrough. The water path 13 has a plurality of bores 14 (for example, six through eight bores) arranged along a peripheral direction of the bearing housing 6 and each bore 14 extends along an axial direction of the bearing housing 6. One end of each of the bores 14 is closed by a plug 15. A supplying pipe 16 is inserted into the bore 14 from the opposite end. Further, the bore 14 is connected to a passage 17 and an outlet bore 18. The passage 17 extends in a radial direction of the bearing housing 6 and the outlet bore 18, which is connected to the passage 17, extends in the axial direction of the bearing housing 6. An outer peripheral end of each the passages 17 is closed by a plug 17a.

A ring-shaped connecting member 19 is provided on an end surface of the bearing housing 6. In the connecting member 19, a ring-shaped supplying groove 21 having connecting holes 20 for connecting to each the supplying pipe 16 and a ring-shaped returning groove 23 having connecting holes 22 for connecting each the outlet hole 18 are formed. At the opposite end surface of the connecting member 19, a cap member 26 is provided. The cap member 26 has a supplying opening 24 connecting to a supplying groove 21 and a returning opening 25 connecting to the ring-shaped returning groove 23.

On the other hand, a bypass pipe 27 is connected to the supplying pipe 11 connected to the heating/cooling or thermo-controlling unit 10. The bypass pipe 27 is connected to the supplying opening 24 formed in the cap member 26. An electro-magnetic valve 28 is provided in the bypass pipe 27 for closing/opening the bypass pipe 27. A bypass pipe 29 is connected to the returning pipe 12. The bypass pipe 29 is connected to an returning opening 25 formed in the cap member 26. Accordingly, a heating medium circular system is provided at the bearing housing 6 and similar in the intaglio plate cylinder 1.

A temperature sensor 30 for detecting a temperature of heated water is provided at the frame 5 near the bearing housing 6. A signal detected from the temperature sensor 30 is supplied to a thermo-controlling device 31. Thus, the electro-magnetic valve 28 is controlled for closing and opening the bypass pipe 27 by the thermo-controlling device 31.

An operation for controlling the temperature of the bearing portion in the above intaglio printing press machine will be described.

When the intaglio printing press machine is operated, heated water as heating medium is supplied from the heating/cooling unit 10 through the pipe 11, the rotary joint 4 and the plate cylinder shaft 3 and returned to the heating/cooling unit 10 from the plate cylinder shaft 3, the rotary joint 4 and the pipe 12 in order to heat up the surface of the intaglio plate cylinder 1 to a predetermined temperature (for example, 90 °C).

In addition to heated water circulation for the intaglio plate cylinder 1, heated water is circulated to the water path 13 in the bearing housing 6. That is, heated water is supplied to the heater path 13 through the bypass pipe 27, the cap member 26 and the connecting member 19 and is returned through the connecting member 19, the cap member 26 and the bypass path 29 opened by the magnetic-electric valve 28. The magnetic-electric valve 28 opens the bypass path 27 when a temperature of the frame 5 detected by the temperature sensor 30 is below the temperature predetermined by the thermo-controlling device 31. The temperature predetermined by the thermo-controlling device 31 is set at a proper temperature at the frame 5 in order to print stably. For example, when a temperature of a surface of the intaglio plate cylinder 1 is set to be 90 °C, the frame is heated to 50 °C at room temperature of 25°C.

Although the plate cylinder shaft 3 expands by the flow of heated water therein, the bearing housing 6 is also expands by the supply of heated water so that over-load applied to the bearing 7 can be prevented.

When the frame 5 is heated above the predetermined temperature, the electro-magnetic valve 28 is closed and the water-supply to the bearing housing 6 is stopped. When the temperature of the frame 5 falls below the predetermined temperature, the electro-magnetic valve 28 is opened so that heated water is circulated again. Thus, the temperature at the frame 5 is thermally controlled to maintain the predetermined temperature range.

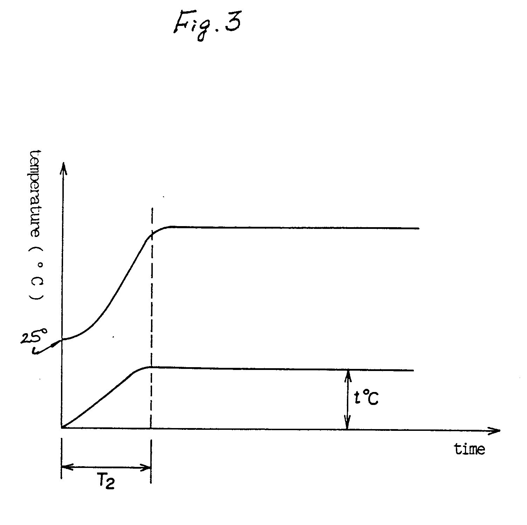

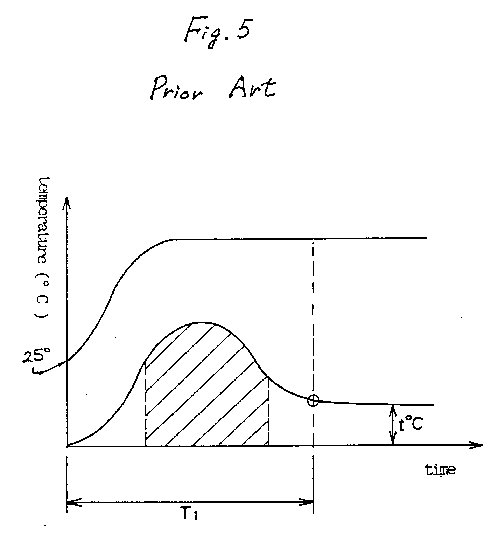

As shown in Figs. 3 and 5, a dangerous condition in which a temperature difference between an outermost peripheral surface and an innermost peripheral surface of the bearing 7 is relatively large is overcome by heating the bearing housing 6. In Figs. 3 and 5, a vertical axis shows temperatures of a cylinder plate and a temperature difference between the innermost surface and the outermost surface of a bearing. A horizontal axis shows a time period after heating up the cylinder plate. An upper line is the temperature difference between the outer peripheral portion and the inner peripheral portion of the bearing 7.

In a case of a conventional printing press machine as shown in Fig. 5, the temperature difference is rapidly increased and then the temperature difference becomes stably. A time period when the temperature difference is relatively large is the above described dangerous condition as shown inclined lines in Fig. 5. A time period T1 is a warming up period to make the temperature difference stable at start. On the other hand, in a case of the printing press machine according to the present invention as shown in Fig. 3, the temperature difference is not rapidly increased. The temperature difference becomes stable soon. A time period T2 is a warming up period beginning from the start. The period T1 is longer 5 ∼ 6 hours than the time period T2. Upon comparing the present invention and the conventional art, a time period for printing can be remarkable shortened in the present invention.

When a plate is changed, relatively cool water is supplied to the intaglio plate cylinder 1 from the thermo-controlling unit 10 in order to change the plate easily. In this case, even if the electro-magnetic valve 28 is controlled to close the bypass path 27, the bearing housing 6 and the frame 5 is maintained at a heating condition. Thus, a warming up period can be shortened.

In the above embodiment, although the heating/cooling unit 10 is used at the same time for heating the bearing housing 6 and for heating the intaglio plate cylinder plate 1, there may be separate heating means. However, in the embodiment in which the heating/cooling unit is commonly used, the embodiment can be provided more economically.

## Claims

1. A printing press comprising:
- a cylinder (1) having a cylinder axis (3);
- a bearing (7) for supporting said cylinder axis (3);
- a bearing housing (6) for supporting said bearing (7);
- a frame (5) for supporting said bearing housing (6);
- a first heating means (10, 11, 12) for heating a surface of said cylinder (1) to a first temperature for a printer operation by supplying heating medium to an inner side of said surface of said cylinder (1) through said cylinder axis (3);
- a second heating means (10, 11, 12, 27, 29) for heating up at least one of said bearing housing (6) and said frame (5) to a second temperature;
- a path (2, 11) of which a part is formed near an outer peripheral surface of said cylinder (1), said first heating means (10, 11, 12) circulating heating medium to said path (2, 11); **characterized by:**
- a bypass (27) divided from said path (11) and connected to at least one of said bearing housing (6) and said frame (5);
- valve means (28) for opening or closing said bypass (27);
- and said second heating means (10, 11, 12, 27, 29) supplying heating medium in said bypass (27, 29) to at least one of said bearing housing (6) and said frame (5).

2. The printing press of claim 1 and further comprising temperature detecting means (30) for measuring the temperature at said bearing housing (6);
wherein said valve means (28) is controlled in accordance with the temperature measured by said temperature detecting means (30).

## Patentansprüche

1. Druckmaschine, mit:
- einem Zylinder (1), der eine Zylinderachse (3) hat;
- einem Lager (7) zur Lagerung der Zylinderachse (3);
- einem Lagergehäuse (6) zur Halterung des Lagers (7);
- einem Rahmen (5) zur Halterung des Lagergehäuses (6);
- einer ersten Heizeinrichtung (10, 11, 12) zur Erwärmung einer Fläche des Zylinders (1) auf eine erste Temperatur für einen Druckbetrieb, indem einer inneren Seite der Fläche des Zylinders (1) durch die Zylinderachse (3) ein Heizmedium zugeführt wird;
- einer zweiten Heizeinrichtung (10, 11, 12, 27, 29) zur Erwärmung des Lagergehäuses (6) und/oder des Rahmens (5) auf eine zweite Temperatur;
- einem Pfad (2, 11), von dem ein Teil nahe einer äußeren Umfangsfläche des Zylinders (1) ausgebildet ist, wobei durch die erste Heizeinrichtung (10, 11, 12) Heizmedium durch diesen Pfad (2, 11) zirkuliert wird; gekennzeichnet durch:
- eine Abzweigung (27), die von dem Pfad (11) abgeht und mit dem Lagergehäuse (6) und/oder dem Rahmen (5) verbunden ist;
- eine Ventileinrichtung (28) zum Öffnen und Schließen der Abzweigung (27);
- wobei das Heizmedium mittels der zweiten Heizeinrichtung (10, 11, 12, 27, 29) durch die Abzweigung (27, 29) dem Lagergehäuse (6) und/oder dem Rahmen (5) zugeführt wird.

2. Druckpresse nach Anspruch 1, die außerdem eine Temperaturerfassungseinrichtung (30) zur Erfassung der Temperatur des Lagergehäuses (6) enthält;
wobei die Ventileinrichtung (28) entsprechend der von der Temperaturerfassungseinrichtung (30) erfaßten Temperatur gesteuert wird.

## Revendications

1. Une presse à imprimer comprenant :
- un cylindre (1) ayant un axe de cylindre (3);
- un palier (7) pour supporter ledit axe de cylindre (3);
- un logement de palier (6) pour supporter ledit palier (7);
- un châssis (5) pour supporter ledit logement de palier (6);
- un premier moyen de chauffage (10, 11, 12) pour chauffer une surface dudit cylindre (1) à une première température pour une opération d'impression en alimentant le milieu de chauffage sur un côté intérieur de ladite surface dudit cylindre (1) au travers dudit axe de cylindre (3);
- un deuxième moyen de chauffage (10, 11, 12, 27, 29) pour chauffer au moins un dudit logement de palier (6) et dudit châssis (5) à une deuxième température;
- un trajet (2,11) dont une partie est formée près d'une surface périphérique extérieure dudit cylindre (1), ledit premier moyen de chauffage (10, 11, 12) faisant circuler le moyen de chauffage audit trajet (2, 11), caractérisé par:
- une dérivation (27) divisée à partir dudit trajet (11) et reliée à au moins un dudit logement de palier (6) et dudit châssis (5);
- un moyen à soupape (28) pour ouvrir ou fermer ladite dérivation (27) ;
- et ledit deuxième moyen de chauffage (10, 11, 12, 27, 29) alimentant le milieu de chauffage dans ladite dérivation (27, 29) jusqu'à au moins l'un dudit logement de palier (6) et dudit châssis (5).

2. La presse à imprimer selon la revendication 1, comprenant en outre, un moyen de détection de température (30) pour mesurer la température audit logement de palier (6), dans laquelle ledit moyen à soupape (28) est commandé selon la température mesurée par ledit moyen de détection de température (30).
